# EUROPEAN PATENT SPECIFICATION

(11) **EP 2 716 193 B1**
(45) Date of publication and mention of the grant of the patent: **06.01.2016**
(21) Application number: 13004740.0
(22) Date of filing: 01.10.2013
(51) Int. Cl.: A47J 37/12, A47J 36/38

(54) **Manual countertop fryer with dump of frying fumes and vapours and with air recirculation**
Tisch-fritiergerät mit Entfernung von Kochdünste und Luftrückführung
Friteuse à poser avec évacuation des vapeurs et recyclage de l'air

(30) Priority: 02.10.2012 IT MO20120238
(43) Date of publication of application: 09.04.2014
(73) Proprietor: Eurochef S.r.l., 41122 Modena (MO) (IT)
(72) Inventor: Manara, Gabriele, 41121 Modena (MO) (IT)
(74) Representative: Gasparini, Alberto

(56) References cited:
- EP-A1- 1 188 403
- EP-A2- 1 179 310
- WO-A1-97/49320
- CA-A1- 1 257 103
- FR-A1- 2 663 241
- US-A- 5 249 510

## Description

### Field of the invention

The present invention refers to a manual bench-type fryer with elimination of frying fumes and vapours and air recirculation, namely a fryer which carries out the elimination of frying fumes and vapours with the elimination and the recirculation of the air in the working environment, remaining a fryer for manual use.

### Known art

The background art includes fryers with automatic cycle of loading and unloading of the product during the frying process; they are also equipped with tricks and devices for the elimination of frying fumes and vapours and air recirculation and therefore they are closed and operate with the door/s closed. These automatic fryers are intended for frying few products or only one product, such as French fries and the like, while the products which need particular attention, i. e. bulky or delicate products to be handled or which also need to be turned during the frying, can be treated only manually and therefore they are not fried in this type of fryers. It is known that these fryers can be equipped with an internal system for the elimination of frying fumes and vapours by means of a refrigeration system, in such a way as to avoid the reintroduction of the treated air into the working environment. Moreover, since these fryers are aimed at frying deep-frozen food the development of frying vapours is minimum because this food is dehydrated at the production stage and it does not release large quantities of water vapour when fried.

In the background art bench-type fryers are known in which the frying chamber is open on the front side facing the operator and from which the operator puts the food to be fried in the baskets. These fryers are practical for a user who has to fry different products and who requires the certainty of a perfect cooking because the baskets are controlled and maintained immersed for the time needed for frying the specific product, so once the frying is completed the baskets are raised and extracted, stopping the frying at the moment required on the basis of the specific type of food. It is known that this type of bench-type fryers are equipped with a suction system for the frying fumes and vapours which are then evacuated to the exterior of the environment where the fryer is placed thanks to a pipe, and also the customers and the public to whom the user supplies the fried food may be present.

One type of fryer is known from document FR 2663241 A1 that shows a manual bench-type fryer with elimination of frying fumes and vapours and air recirculation comprising a frying chamber, equipped with systems for the suction of the fumes and vapours generated; an air flow is sucked from outside the working environment and mixed with the fumes and vapours, and also purifying them by heating from the fat particles in suspension; the so treated air is reintroduced into the frying chamber (2) or evacuated with the residues of treated air and fumes; at least one basin with the frying oil into which at least one basket is immersed; a heating device of the frying oil and a device for controlling and adjusting the temperature of the frying oil. However this type of fryer spent energy to purifying the flow and re-introduce residues in the working environment, thus it need to be discharged outside of the working environment.

Moreover, it is often necessary to install the fryer in environments whose position does not allow a connection with the external environment to make it possible to discharge the fumes and vapours produced while frying; so, the versatility required in manually-operated bench-type frying machines makes it also necessary to consider large quantities of fumes and vapours produced while the food is being fried.

In conclusion, the known manual bench-type fryers in which the vent needs to be connected with the exterior are penalized since they cannot be installed in environments without exhaust ducts. So, only the fryers with automatic management and in closed frying chamber can be installed in these environments, while the open fryers without vent, if installed, would fill the environment in which they are placed with fumes, vapours and therefore smells of the food being fried, also in a persisting way. As a consequence, open bench-type fryers for the manual management of the load, control of the frying process and extraction of the fried product, are penalized because when using fresh food, i. e. also producing a lot of vapour during the frying process, they cannot be installed in closed environments with no connection or vent with the external environment.

This background art is subject to important improvements regarding the possibility to make a manual bench-type fryer with elimination of frying fumes and vapours and air recirculation designed to make it possible to recirculate the air of the environment within the frying chamber and at the same time to reintroduce it into the environment where the fryer is installed.

Therefore, the technical problem which is at the basis of the present invention is to make a manual bench-type fryer with elimination of frying fumes and vapours and air recirculation which allows the functioning with deep-frozen food or also with home-made fresh food, and so with considerable generation of vapour during the frying stage, still maintaining limited sizes and being installable precisely on a work bench where an exhaust duct towards the exterior is not available.

An additional and not least aim of the present invention is to make a manual bench-type fryer with elimination of frying fumes and vapours and air recirculation in such a way as to optimize the management of fumes and particularly of vapours, which are generated in the frying chamber, carrying out a preferred elimination and recirculation in the environment of the air sucked from the frying chamber, but purified from fumes and vapours.

Finally, an additional technical problem which occurs when making a manual bench-type fryer with elimination of frying fumes and vapours and air recirculation is to carry out a more effective and functional elimination considering the variability of the fumes and vapours produced, in such a way as to recirculate purified air in the working environment.

### Summary of the invention

This technical problem is solved according to this invention by a manual bench-type fryer with elimination of frying fumes and vapours and air recirculation according to claim 1.

In an additional constructive embodiment: the refrigeration unit has an evaporator with discharge of the condensation into the internal chamber of the fryer.

In an improved constructive embodiment of the fryer the remover is housed on the upper part of the frying chamber, and downstream of a suction fan it has a serpentine-line path of the airflow being purified, to guide it on vapour condensation lamellar blocks, a metallic filter and a final active carbon filter before the expulsion of the air purified in the environment where the fryer is placed.

Finally, in a further improved constructive embodiment, the vapour condensation lamellar blocks are three and they discharge the condensation in the frying chamber at the exterior of the basin with the frying oil.

The characteristics and advantages of the present invention in the production of a manual bench-type fryer with elimination of frying fumes and vapours and air recirculation will be evident in the description, made hereinafter, of an indicative and not limiting embodiment with reference to the six enclosed drawing sheets.

### Brief description of the drawings

- Figure 1 represents a schematic sideways and semi-transparent view of a bench-type fryer where the frying chamber and the elimination and recirculation apparatuses are visible;
- Figure 2 represents a schematic plan semi-transparent view of a bench-type fryer where the elimination and recirculation apparatuses are visible;
- Figure 3 represents a schematic semi-transparent view from behind of a bench-type fryer where the elimination and recirculation apparatuses are visible;

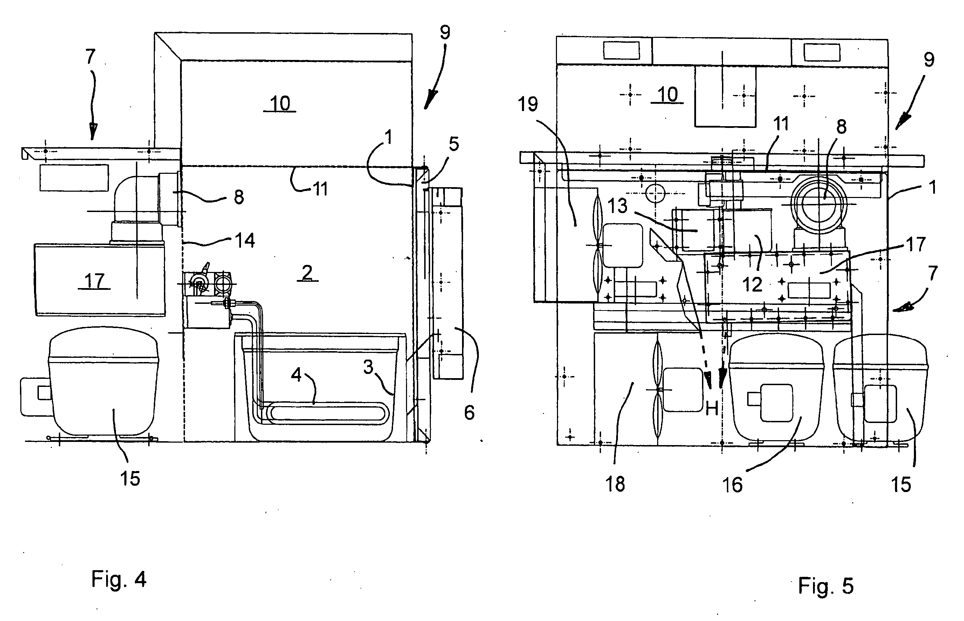

- Figure 4 represents a schematic sideways view of the fryer of Figure 1 limited to the frying chamber and elimination apparatuses;
- Figure 5 represents a schematic view from behind of the fryer of Figure 1 and similar to the view of Figure 3, limited to the apparatuses for the elimination of fumes and vapours;
- Figure 6 represents a schematic plan view of the fryer of Figure 1 limited to the chamber for purification of the air for introduction into the working environment;
- Figure 7 represents a schematic front view of the air purification chamber of Figure 6, for introduction into the working environment.

### Detailed description of a preferred embodiment

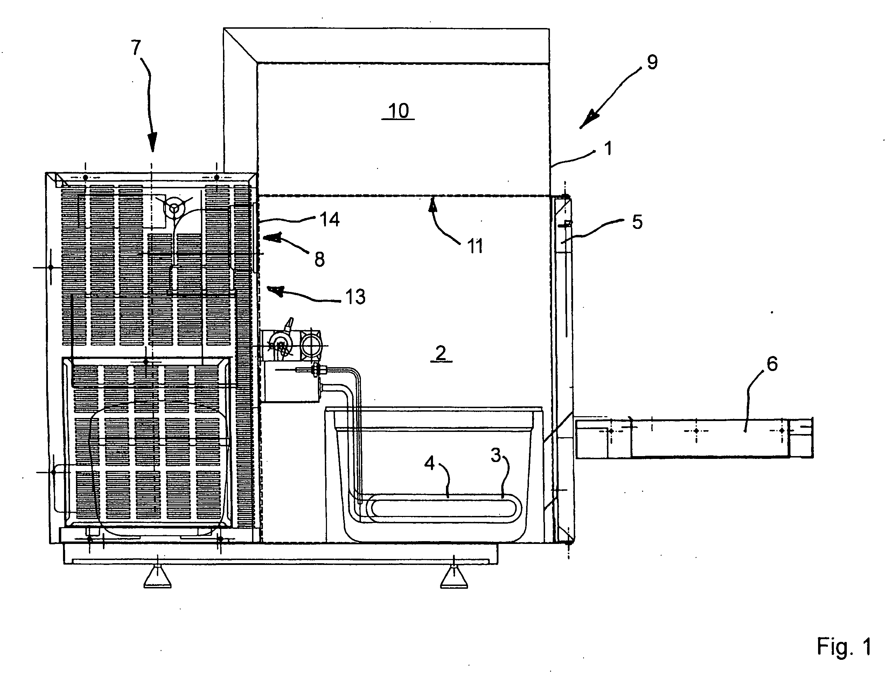

In Figure 1 the fryer is visible consisting of a casing 1 within which in the frying chamber 2 at least one basin 3 is housed with the oil heated by a serpentine 4 which constitutes the heating device. The frying chamber is equipped with a door 5 for the access to the basin 3 and with a flap 6, here represented opened, for the access to the frying chamber in the working condition. In the back there is a refrigeration unit 7 for refrigerating and eliminating the frying fumes and vapours it sucks from a mouth 8 in the frying chamber 2. At the top of the frying machine 9 there is a filtering unit 10 for the air sucked from the frying chamber 2, by means of a mouth 11 in a central position at the top of the frying chamber.

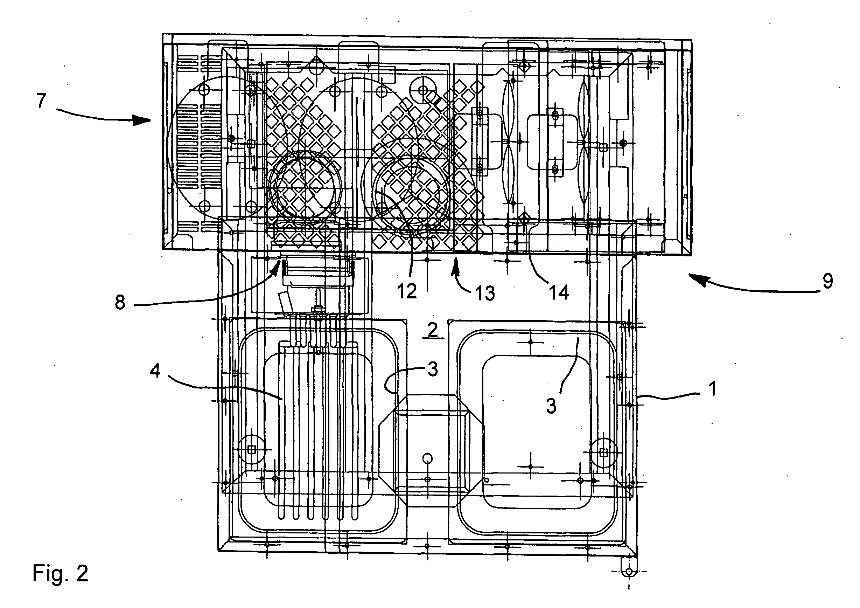

In Figure 2, the manual bench-type fryer has a double basin 3 for containing two baskets simultaneously, which are not represented here. The frying chamber 2 is equipped with the refrigeration unit 7 to condensate the large quantity of water vapour which may be also only occasionally generated by the contemporary use of the two baskets. After the elimination of the fumes and vapours the air is reintroduced into the frying chamber 2 pushed by the fan 12 through the mouth 13 in the back wall 14 of the frying chamber.

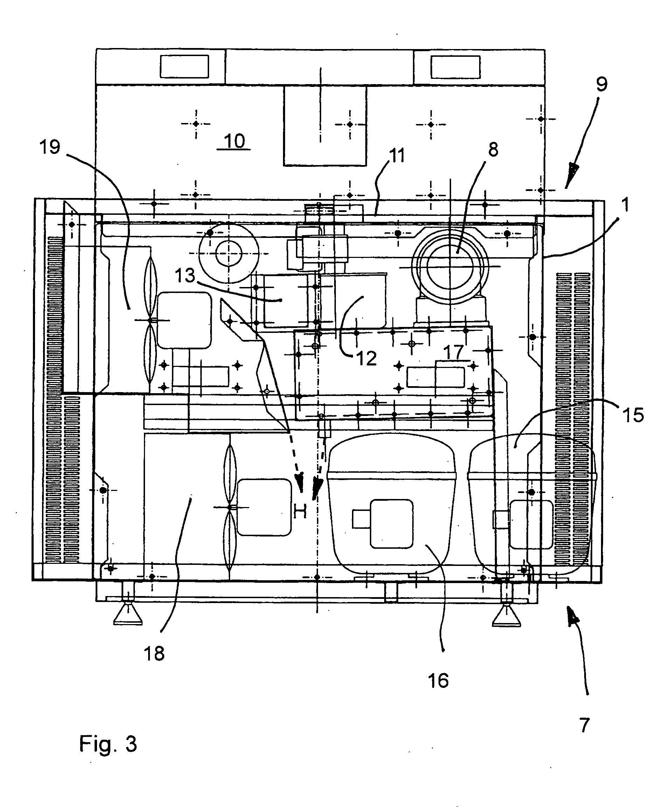

In Figure 3 also the compressors 15 and 16 are visible of the refrigeration unit 7 which presents an evaporator 17 and two condensers 18 and 19. The condensation water H is channelled by means of a hose in a collection container placed under the machine, therefore the so treated air returns into the frying chamber 2 pushed by the fan 12.

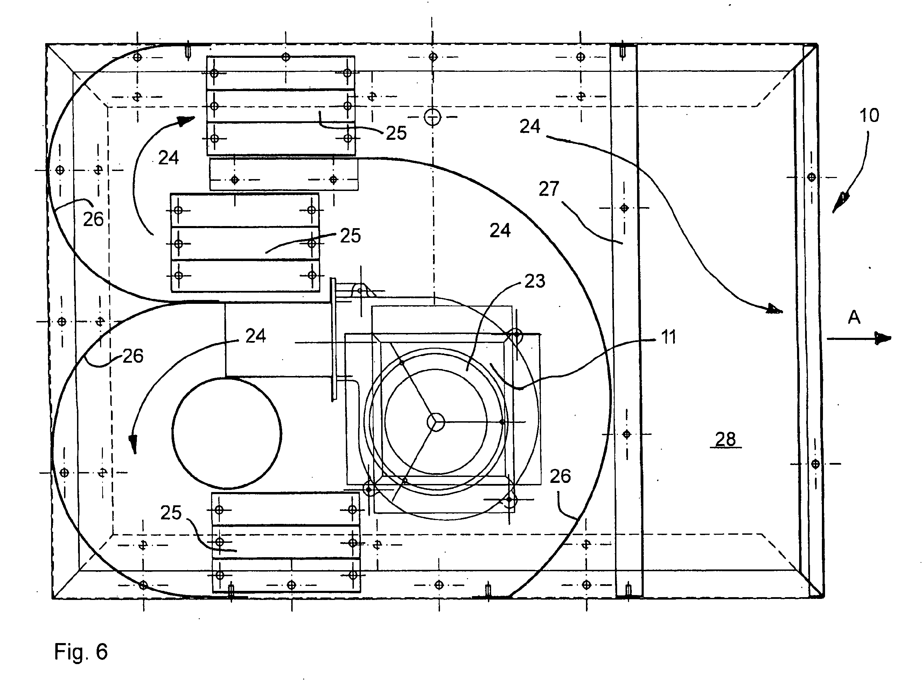

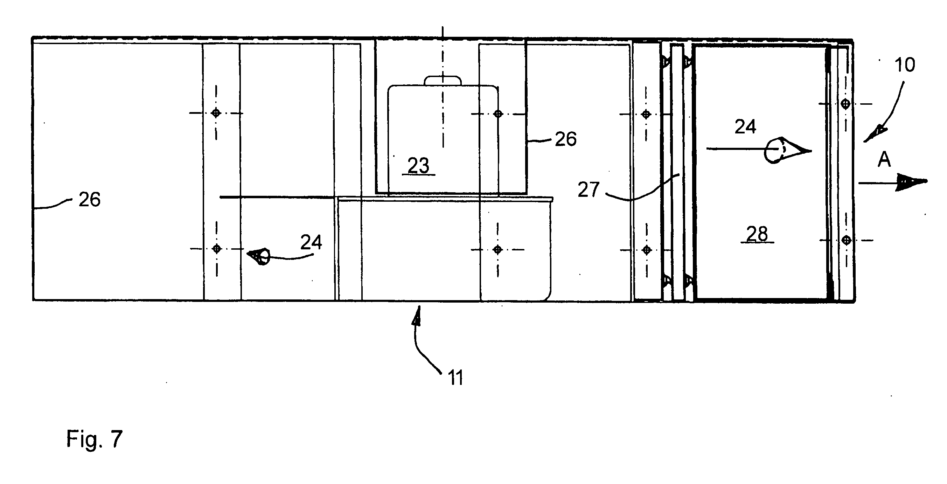

Finally, Figures 6 and 7 show the purification device 10 for the air sucked from the underlying frying chamber 2, in which a fan 23 sucks the air, through the mouth 11, and channels it into the purification circuit 24 and makes it go through lamellar blocks 25, for the condensation of the vapour contained in the sucked air: the condensation water falls again into the frying chamber, out of the basins 3; the winding path allows to arrange several lamellar blocks and to contain the encumbrance of the channel 26 which guides the airflow in the circuit 24; the air so purified of a large part of the water vapour crosses a metallic filter 27 and finally an active carbon filter 28, before being expelled A into the working environment where the fryer 9 is placed.

The functioning of the manual bench-type fryer with elimination of frying fumes and vapours and air recirculation according to the invention occurs with the loading of the food to be fried with the basket manually through the flap 6 in the corresponding basin 3. The electronic control checks the time and temperature of the oil during the frying process, avoiding harmful over-temperatures and coolings of the oil during the frying process, and indicating the end of it to the operator. During the frying process, through the flap 6 which remains opened, the operator can control the process as desired. The fryer 9 with the refrigeration system 7 sucks the air, fumes and vapours from the frying chamber 2 through the mouth 8 and condenses them in the evaporator 17. The air so refrigerated and purified is pushed into the frying chamber 2 by the fan 12. In this way part of the water vapour and the fat particles like the oil atomized in the frying process are eliminated from the sucked air.

On the top of the frying chamber 2 a remover 10 of the air sucked from the frying chamber is constructed which operates in combination with the refrigeration unit 7, and treats the air, fumes and vapours sucked by the fan 23 through a mouth 11. That is from the frying chamber 2 two air flows are simultaneously taken with fumes and vapours which are treated in different ways: one of them by means of the elimination with the refrigerator 7 is reintroduced into the same frying chamber; the second flow is sucked on the upper part and is treated in the remover 10, which acts as a hood inside the fryer 9, and expels the purified air in the working environment, to compensate the air constantly sucked by the front working mouth, which remains always open, the flap 6 being lowered during the work.

Therefore, the air sucked by the remover with the remaining fumes and vapours not captured by the mouth 8 is channelled towards multiple lamellar blocks 25, in the path of the air of the purification circuit 24, guided by the channel 26. The water vapour condenses on the lamellar blocks and the water falls into the underlying frying chamber 2 out of the basin 3. The airflow continues through the purification circuit 24 crossing a metallic filter 27 and an active carbon filter 28, before being released A into the working environment where the manual fryer 9 is placed.

The functioning of the remover 10 and of the refrigeration unit 7 occurs simultaneously and the airflows sucked from the frying chamber 2 by the two devices working simultaneously, to make the working position comfortable of the user and of the public in the room, present a marked overall hollow in the frying chamber 2, to obtain a constant incoming air flow through the working opening left by the open flap 6. So, in case the quantity of incoming air in the frying chamber is limited, the quantity is also limited of the corresponding air reintroduced A into the working room through the exhaust of the remover 10. On the contrary, the effect of elimination and purification of the air taken from the frying chamber is much stronger because the treated air is much more than the air sucked from and reintroduced into the working room. So, the operator and the customers are not bothered by fumes and vapours coming from the fryer, because the air is treated, and the great quantity of air which must be treated for elimination and purification for frying fresh products or home-made products is not exchanged at all with the working environment even if the frying chamber of the fryer operates opened.

The advantages in the use of a manual bench-type fryer with elimination of frying fumes and vapours and air recirculation may be summarized as follows. The fryer described is versatile because it can fry any kind of food in a manual way. Also in the presence of fresh or home-made food it allows to fry in rooms without suitable connections with the outside for discharging the fumes and vapours produced by the fryer. That is, this fryer as described and claimed does not release frying fumes, vapours or smells into the working environment, making it pleasant to stay in proximity of the machine, also for the users of the fried product.

The fryer described above, with the subdivision of the airflows, with fumes, vapours and smells sucked from the frying chamber 2, makes it possible to treat a large quantity of sucked air with a reduced air exchange with the working environment. Moreover said air exchange can occur as desired on the basis of the frying needs of the operator.

Obviously, in order to satisfy specific and incidental needs, an expert in the field may introduce numerous changes to a manual bench-type fryer with elimination of frying fumes and vapours and air recirculation, still falling within the scope of protection of the present invention as defined by the following claims. So, even if less advantageously, the number of basins with the frying oil, of the baskets used or the sizes of the refrigeration apparatus or the remover, may change depending on the production capacities required to the manual fryer as here claimed.

## Claims

1. Manual bench-type fryer with elimination of frying fumes and vapours and air recirculation comprising a frying chamber (2), equipped with systems for the suction and evacuation of the fumes and vapours generated; at least one basin (3) with the frying oil into which at least one basket is immersed; a heating device (4) of the frying oil and a device for controlling and adjusting the temperature of the frying oil; wherein it has a second suction mouth (8) for the fumes and vapours generated which is connected to a refrigeration unit (7), inside the fryer, for refrigerating the sucked air, eliminating the vapours, and also purifying from the fat particles in suspension; the so treated air being reintroduced into the frying chamber (2) by means of a recirculation fan (12); moreover, downstream of a first suction mouth (11) it has a remover (10) of vapours and fumes sucked with the air in a path of airflow (24) which is different from the air path flow through the refrigeration unit; the purified airflow (24) being reintroduced into the working environment of the fryer.

2. Bench-type fryer, according to claim 1, in which the refrigeration unit (7) has an evaporator (19) with discharge of the condensation into the internal chamber of the fryer.

3. Bench-type fryer, according to claim 1, in which the refrigeration unit (7) has an evaporator (19) with discharge of the condensation into a container placed under the fryer.

4. Bench-type fryer, according to one of the preceding claims 1, 2 or 3, in which the remover (10) is housed on the upper part of the frying chamber (2), and downstream of a suction fan (23) it has a serpentine path of the airflow (24) being purified, to guide it on vapour condensation lamellar blocks (25), a metallic filter (27) and a final active carbon filter (28) before the expulsion of the purified air (A) into the environment where the fryer is placed.

5. Bench-type fryer, according to the previous claim 4, in which there are three vapour condensation lamellar blocks (25) which discharge the condensation in the frying chamber at the exterior of the basin (3) with the frying oil.

## Patentansprüche

1. Handbetriebene bankartige Fritteuse mit Entfernung von Frittierdünsten und Dämpfen und mit Luftrückführung, umfassend eine Frittierkammer (2), ausgerüstet mit Systemen für das Absaugen und Abführen der erzeugten Dünste und Dämpfe, mindestens einen Behälter (3) mit dem Frittieröl, in welches mindestens ein Korb eingetaucht wird, eine Heizvorrichtung (4) für das Frittieröl und eine Vorrichtung zur Regelung und Einstellung der Temperatur des Frittieröls, wobei ein zweiter Saugmund (8) für die erzeugten Dünste und Dämpfe vorhanden ist, welcher innerhalb der Fritteuse mit einer Kühleinheit (7) verbunden ist zur Abkühlung der angesaugten Luft, zur Entfernung der Dämpfe und auch zur Reinigung von den Fettpartikeln in Suspension, wobei die solchermaßen behandelte Luft mit Hilfe eines Rückführgebläses (12) in die Frittierkammer (2) zurückgeführt wird, wobei darüber hinaus einem ersten Saugmund (11) nachgeordnet ein Entferner (10) für Dämpfe und Dünste vorhanden ist, welche mit der Luft in einer Bahn eines Luftstroms (24) abgesaugt werden, welcher sich von der Bahn des Luftwegs durch die Kühleinheit unterscheidet, wobei der gereinigte Luftstrom (24) in die Arbeitsumgebung der Fritteuse zurückgeführt wird.

2. Bankartige Fritteuse nach Anspruch 1, wobei die Kühleinheit (7) einen Verdampfer (19) mit einem Auslass für das Kondenswasser in die innere Kammer der Fritteuse aufweist.

3. Bankartige Fritteuse nach Anspruch 1, wobei die Kühleinheit (7) einen Verdampfer (19) mit einem Auslass für das Kondenswasser in einen unterhalb der Fritteuse angeordneten Behälter aufweist.

4. Bankartige Fritteuse nach einem der vorangehenden Ansprüche 1, 2 oder 3, wobei der Entferner (10) auf dem oberen Teil der Frittierkammer (2) angeordnet ist, und wobei er einem Absauggebläse (23) nachgeordnet einen serpentinenartigen Weg für den in Reinigung befindlichen Luftstrom (24) aufweist, um diesen auf Lamellenblöcke (25) zur Dampfkondensation, einen metallischen Filter (27) und einen finalen Aktivkohlefilter (28) zu führen, bevor die gereinigte Luft (A) in die Umgebung der Fritteuse ausgestoßen wird.

5. Bankartige Fritteuse nach dem vorangehenden Anspruch 4, umfassend drei Lamellenblöcke (25) zur Dampfkondensation, welche das Kondenswasser in die Frittierkammer außerhalb des Behälters (3) mit dem Frittieröl ablassen.

## Revendications

1. Friteuse manuelle de type à poser avec élimination des fumées et des vapeurs de friture et recirculation de l'air comprenant une chambre de friture (2) équipée de systèmes pour l'aspiration et l'évacuation des fumées et des vapeurs générées ; au moins un bol (3) avec l'huile de friture dans laquelle au moins un panier est immergé ; un dispositif de chauffage (4) de l'huile de friture et un dispositif pour commander et régler la température de l'huile de friture ; dans laquelle elle a une seconde bouche d'aspiration (8) pour les fumées et les vapeurs générées qui est raccordée à une unité de réfrigération (7), à l'intérieur de la friteuse, pour réfrigérer l'air aspiré, éliminer les vapeurs et également supprimer les particules grasses en suspension ; l'air ainsi traité étant introduit dans la chambre de friture (2) au moyen d'un ventilateur de recirculation (12) ; de plus, en aval de la première bouche d'aspiration (11), elle a un extracteur (10) de vapeurs et de fumées aspirées avec l'air dans un trajet du flux d'air (24) qui est différent du trajet de flux d'air à travers l'unité de réfrigération ; le flux d'air purifié (24) étant réintroduit dans l'environnement de travail de la friteuse.

2. Friteuse de type à poser selon la revendication 1, dans laquelle l'unité de réfrigération (7) a un évaporateur (19) avec décharge de la condensation dans la chambre interne de la friteuse.

3. Friteuse de type à poser selon la revendication 1, dans laquelle l'unité de réfrigération (7) a un évaporateur (19) avec décharge de la condensation dans un récipient placé sous la friteuse.

4. Friteuse de type à poser selon l'une des revendications 1, 2 ou 3, dans laquelle l'extracteur (10) est logé sur la partie supérieure de la chambre de friture (2) et en aval d'un ventilateur d'aspiration (23), elle a un trajet de flux d'air purifié (24) en serpentin, afin de le guider sur des blocs lamellaires de condensation de vapeur (25), un filtre métallique (27) et un filtre final à charbon actif (28) avant l'expulsion de l'air purifié (A) dans l'environnement où la friteuse est placée.

5. Friteuse de type à poser selon la revendication 4, dans laquelle il y a trois blocs lamellaires de condensation de vapeur (25) qui déchargent la condensation dans la chambre de friture à l'extérieur du bol (3) avec l'huile de friture.
